# EUROPEAN PATENT APPLICATION

(11) **EP 4 574 587 A1**
(43) Date of publication of application: **25.06.2025**
(21) Application number: 23218672.6
(22) Date of filing: 20.12.2023
(51) Int. Cl.: B60T 1/10, B60T 8/17, B60T 8/172, B60T 13/58

(54) **MANAGING BRAKE STRATEGY OF A VEHICLE**

(71) Applicant: VOLVO TRUCK CORPORATION, 405 08 Göteborg (SE)
(72) Inventor: Hjelte Ulmehag, Robert, 418 76 Göteborg (SE); Vilca, José, 421 71 Västra Frölunda (SE); Ni, Lei, 417 67 Göteborg (SE)
(74) Representative: Valea AB

(57) **Abstract**

A computer system (600) comprising processing circuitry (602) configured to handle brake strategies for a braking arrangement (50) of a vehicle (1) is provided. The braking arrangement (50) is configured with a first brake strategy. The processing circuitry (602) is configured to obtain one or more brake strategy parameters. The one or more brake strategy parameters is indicative of a status of the braking arrangement (50) and/or one or more environmental parameters of a road (10) travelled by the vehicle (1). The processing circuitry (602) is configured to, based on a motion of the vehicle (1) and the one or more brake strategy parameters, select a second brake strategy out of the set of brake strategies for the braking arrangement (50) to use. The processing circuitry (602) is configured to trigger the braking arrangement (50) of the vehicle (1) to transition from the first brake strategy to the second brake strategy.

## Description

### TECHNICAL FIELD

The disclosure relates generally to brake management. In particular aspects, the disclosure relates to managing brake strategy of a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Vehicles typically use a set brake strategy configured for a particular purpose, such as to perform brake operations that will harvest energy in an optimal manner, or to perform brake operations that will result in even brake wear. Another option for a brake strategy is or to perform brake operations that will have optimal traction on low friction surfaces. Independent of strategy used, the strategies may all have been developed with a set application purpose and/or a specific environment in mind. If circumstances of the application or environment changes for the vehicle, then the vehicle is still configured to use the same brake strategy, even though it may be sub-optimal for the new circumstances.

Hence, more efficient and flexible brake management of a vehicle is needed.

### SUMMARY

According to a first aspect of the disclosure, a computer system comprising processing circuitry configured to handle brake strategies for a braking arrangement of a vehicle travelling on a road is provided. The braking arrangement is configured with a first brake strategy out of a set of brake strategies. Each brake strategy out of the set of brake strategies at least defines a brake force distribution to use when braking the vehicle using the respective strategy. Each brake strategy out of the set of brake strategies may further be arranged for a specific purpose such as to achieve a predefined brake effect.

The processing circuitry is configured to obtain one or more brake strategy parameters. The one or more brake strategy parameters is indicative of a status of the braking arrangement and/or one or more environmental parameters of the road.

The processing circuitry is configured to obtain vehicle motion information indicative of a motion of the vehicle.

The processing circuitry is configured to, based on the vehicle motion information and the one or more brake strategy parameters, select a second brake strategy out of the set of brake strategies for the braking arrangement to use.

The processing circuitry is configured to trigger the braking arrangement of the vehicle to transition from the first brake strategy to the second brake strategy.

The first aspect of the disclosure may seek to enable transitioning between brake strategies in a smooth and efficient manner.

A technical benefit may include more efficient and flexible brake management. This is since the transition from the first brake strategy to the second brake strategy enables the vehicle to adapt its brake distribution in a flexible and efficient manner when deemed suitable due to the motion of the vehicle in combination with the one or more brake parameters. Since the second brake strategy is selected out of the set of brake strategies, the most suitable brake strategy can be selected with respect to the vehicle motion information and the one or more brake strategy parameters. This is since based on how the vehicle moves, the environment of the vehicle, and/or the current status of the braking arrangement it can be determined which of the set of brake strategies is the most suitable for the current circumstances of the vehicle. For example, if the environment of the vehicle, and/or the current status of the braking arrangement indicates that the vehicle is travelling fast on a low friction surface, a traction-optimized brake strategy may be needed which can thereby be selected as the second brake strategy.

Optionally in some examples, including in at least one preferred example, the processing circuitry is configured to, based on the vehicle motion information and the one or more brake strategy parameters, determine a transition configuration indicative of when and/or how to transition from using the first brake strategy to using the second brake strategy. In these examples, the processing circuitry is further configured to trigger the transition from using the first brake strategy to using the second brake strategy based on the transition configuration.

A technical benefit may include a more flexible and efficient change of brake strategies. This is since the vehicle can transition from using the first brake strategy to using the second strategy in a more controlled manner, e.g., using a certain timing and/or how a blending of the first and second brake strategies may take place before exclusively using the second brake strategy.

Optionally in some examples, including in at least one preferred example, the transition configuration comprises a fade factor indicative of how a brake distribution of the first brake strategy is to, during a transitioning time period, adapt into a brake distribution of the second brake strategy.

A technical benefit may include a more flexible and efficient change of brake strategies. This is since the first brake strategy can be faded out during the transitioning time period, and/or the second brake strategy can be faded in during the transitioning time period.

Optionally in some examples, including in at least one preferred example, the processing circuitry is configured to determine the transition configuration by being configured to select the fade factor out of a set of fade factors. A fade factor as used herein may indicate how fast one or more aspects of a brake strategy is to be faded in or out. For example, the fade factor may indicate how fast the brake distribution of the first brake strategy is to be adapted to the brake distribution of the second brake strategy when transitioning between the first and second brake strategies.

A technical benefit may include a more flexible and efficient change of brake strategies. This is since the most suitable fade factor can be selected out of the set of fade factors, such as the most suitable for the vehicle motion and/or for the selected brake strategy.

Optionally in some examples, including in at least one preferred example, the processing circuitry is further configured to trigger the braking arrangement of the vehicle to transition from using the first brake strategy to using the second brake strategy by triggering a plurality of changes in the brake distribution of the braking arrangement over a second time period.

A technical benefit may include a more flexible and efficient transition of brake strategies. This is since the brake distribution of the first brake strategy can be incrementally changed over time to the second brake strategy such as by incrementally changing the brake distribution of the first brake strategy to the brake distribution of the second brake strategy over a set time period. In this way, the transition between the first brake strategy and the second brake strategy is smooth and will minimize impact on how a driver of the vehicle will experience a change in control of the vehicle and braking arrangement, and therefore, an improved control of the vehicle is achieved.

Optionally in some examples, including in at least one preferred example, the brake force distribution defines a brake force to be actuated by any one or more out of:
- - one or more regenerative brakes of the braking arrangement,
- - one or more service brakes of the braking arrangement, and
- - one or more auxiliary brakes of the braking arrangement.

A technical benefit may include a more flexible and efficient change of brake strategies. This is since the brake distribution of the first brake strategy and the brake distribution of the second brake strategy may shift usage of between different types of brakes in the braking arrangement.

Optionally in some examples, including in at least one preferred example, the set of brake strategies comprises strategies associated with different respective brake effects when used to brake the vehicle.

A technical benefit may include a more flexible and efficient change of brake strategies. This is since selecting the second brake strategy and transitioning between the first brake strategy and the second brake strategy enables achieving a different effect as associated with the second brake strategy.

Optionally in some examples, including in at least one preferred example, the processing circuitry is configured to obtain an indication of a brake effect to be prioritized when braking the vehicle. In these examples, the processing circuitry is configured to select the second brake strategy based on the indicated brake effect.

A technical benefit may include a more flexible and efficient change of brake strategies. This is since the brake effect to be prioritized can be identified, e.g., by determination and/or by a preference input, and the second brake strategy can be selected accordingly to best achieve the prioritized brake effect.

Optionally in some examples, including in at least one preferred example, the brake effects comprise any one of the following:
- - to even out brake wear of the brakes of the braking arrangement,
- - to even out tire wear of the vehicle,
- - to increase stability of the vehicle,
- - to reduce a stop time of the vehicle,
- - to increase traction to a surface travelled by the vehicle,
- - to increase energy harvesting of regenerative brakes in the braking arrangement, and
- - to increase usages of auxiliary brakes for braking the vehicle.

Due to the many different brake effects that can affect the selection of the second brake strategy, a technical benefit may include a more efficient and flexible handling of brake strategies.

Optionally in some examples, including in at least one preferred example, status of the braking arrangement is indicative of whether the vehicle has activated a stability function, such as an Anti-lock Braking System (ABS) or an Electronic Stability Control (ESC) function of the braking arrangement.

A technical benefit may include a more flexible and efficient change of brake strategies. This is since the activated stability function affects how the braking of the vehicle is performed, and/or the usage may counter effects of the first brake strategy and may therefore affect choice of second brake strategy. Furthermore, when ABS or ESC is in use, low friction surface of the road travelled by the vehicle is implied. Therefore, depending on the vehicle motion, it may be suitable to select the second brake strategy to a strategy which aims to increase traction to the road, e.g., which may be deemed more suitable than for example using a brake strategy for improving energy harvesting. Transitioning between brake strategies may in such scenarios involve redistributing brake force from regenerative brakes to service brakes of the vehicle.

Optionally in some examples, including in at least one preferred example, the one or more environmental parameters of the road comprises any one or more out of:
- sensor data and/or measurements of the road in a driving direction of the vehicle,
- one or more environmental factors of the road,
- an indication of one or more traffic events in a driving direction of the vehicle, and
- a friction coefficient of the road in the driving direction of the vehicle.

A technical benefit may include a more flexible and efficient change of brake strategies. This is since the second brake strategy may be more accurately selected based on the environmental parameters such as when the friction coefficient is low, improved traction may be needed and the second brake strategy can be selected accordingly. When the sensor data and/or measurements and/or the one or more traffic events indicates traffic events, e.g., congestion, accidents, or obstacles in the road, fast braking may potentially be needed and the second brake strategy can be selected to a brake strategy aimed to reduce a stop time of the vehicle such as by having a brake force distribution distributed to only service brakes of the braking arrangement. When the one or more environmental parameters indicates normal or high friction, then the second brake strategy may be selected to a strategy for improved energy harvesting. However, if the State of Charge (SoC) of a battery of the vehicle is too high or if the vehicle lacks regenerative brakes such that energy harvesting is not possible, then the second brake strategy can be selected to a strategy for increasing the usage of the one or more auxiliary brakes.

Optionally in some examples, including in at least one preferred example, the motion of the vehicle comprises any one or more out of:
- a longitudinal and/or lateral speed of the vehicle,
- an acceleration of the vehicle,
- one or more wheel speeds of the vehicle, and
- a longitudinal and/or lateral wheel slip of one or more wheels of the vehicle.

A technical benefit may include a more flexible and efficient change of brake strategies. This is since the second brake strategy may be more accurately selected based on the vehicle motion, e.g., if improved traction is needed due to a fast or unstable motion of the vehicle, or if the second brake strategy can be selected to focus on other aspects such as to reduce tire wear or brake wear of service brakes.

Optionally in some examples, including in at least one preferred example, the processing circuitry is configured to select the second brake strategy in response to detecting a triggering event. In these examples, the triggering event indicates a change in the one or more brake strategy parameters.

A technical benefit may include a more flexible and efficient change of brake strategies. This is since if the one or more brake strategy parameters changes, it is implied that a brake strategy selection for the second brake strategy may have changed. A selection of the second brake strategy is therefore needed.

According to a second aspect of the disclosure, a vehicle comprising a braking arrangement and comprising the computer system according to the first aspect is provided.

Technical benefits of the second aspect corresponds to the technical benefits of the first aspect.

According to a third aspect of the disclosure, a computer-implemented method for handling brake strategies for a braking arrangement of a vehicle travelling on a road is provided. The braking arrangement is configured with a first brake strategy out of a set of brake strategies. Each brake strategy out of the set of brake strategies at least defines a brake force distribution to use when braking the vehicle using the respective strategy.

The method comprises, by processing circuitry of a computer system, obtaining one or more brake strategy parameters. The one or more brake strategy parameters is indicative of a status of the braking arrangement and/or one or more environmental parameters of the road.

The method comprises, by the processing circuitry, obtaining vehicle motion information indicative of a motion of the vehicle.

The method comprises, by the processing circuitry, based on the vehicle motion information and the one or more brake strategy parameters, selecting a second brake strategy out of the set of brake strategies for the braking arrangement to use.

The method comprises, by the processing circuitry, triggering the braking arrangement of the vehicle to transition from using the first brake strategy to using the second brake strategy.

Optionally in some examples, including in at least one preferred example, the method comprises, based on the vehicle motion information and the one or more brake strategy parameters, determining a transition configuration indicative of a when and/or how to transition from using the first brake strategy to using the second brake strategy. In these examples, the method comprises triggering the transition from using the first brake strategy to using the second brake strategy based on the transition configuration.

Optionally in some examples, including in at least one preferred example, the method comprises obtaining an indication of a brake effect to be prioritized when braking the vehicle. In these examples, the method comprises selecting the second brake strategy based on the indicated brake effect.

Optionally in some examples, including in at least one preferred example, the method comprises detecting a triggering event. In these examples, the triggering event indicates a change in the one or more brake strategy parameters. In these examples, the method comprises selecting the second brake strategy in response to detecting the triggering event.

Technical benefits of the third aspect corresponds to the technical benefits of the first aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** illustrates a vehicle according to an example.
**FIG. 2** illustrates a flowchart of a method according to an example.
**FIG. 3** illustrates a selection of a brake strategy according to an example.
**FIG. 4** illustrates a flowchart of a method according to an example.
**FIG. 5** illustrates another view of **FIG. 1****,** according to an example.
**FIG. 6** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

In brake function of vehicles such as trucks, different brake strategies may be available to serve different purposes. Some brake strategies are developed to align pad wear on each brake, e.g., to use all brake pads equally and/or to use active wear control based on wear signals. Some other brake strategies are directed to maximize grip force, i.e., traction that can be achieved by a vehicle, e.g., by using a load-based and/or wheel slip based brake force distribution. However, reasons for how to optimize and/or adjust the brake strategies may change over time, e.g., based on environmental factors, as some strategies may only work well under some conditions. Therefore, examples herein provide selection between different brake strategies which may be performed in multiple ways which will be discussed by examples herein.

Once selecting a brake strategy to switch to, transitioning to said brake strategy may be performed in multiple different manners.

One way is to fade-in and fade-out brake strategies depending on a vehicle velocity and deceleration request. For example, at low retardation request, brake force may be distributed equally to each service brake of the vehicle. When a retardation request increase, a brake force distribution may move towards load-based brake strategy. While using such an approach may achieve an efficient braking of the vehicle, this approach may imply repeated performance, at least if only transitioning between the same two brake strategies for the different retardation requests. Some examples herein further considers changing a brake strategy so that a brake maneuver in a future instance is always improved, i.e., the brake strategy of the vehicle may repeatedly transition to the brake strategy which can be determined to be the most suitable brake strategy for a current vehicle motion and its current environment and braking arrangement status. If sufficient information is provided in advance e.g. by a camera and/or by other sensors, then the brake strategy may be adjusted before a brake maneuver is performed.

For example, a vehicle travels on polished ice, and wheels start to slip at low torque, if a traction-optimized brake strategy, e.g., only using service brakes for braking, is used instead of an equal pad-wear oriented brake strategy, e.g., using partly auxiliary brakes for braking, more grip force can be achieved. In some examples herein, a vehicle may change to the traction-optimized brake strategy after detecting the usage of ABS which implies that road conditions are slippery. However, the traction-optimized strategy can also be transitioned to earlier, even before a brake is performed on the polished ice, e.g., if the environment information was detected by sensors such as a camera.

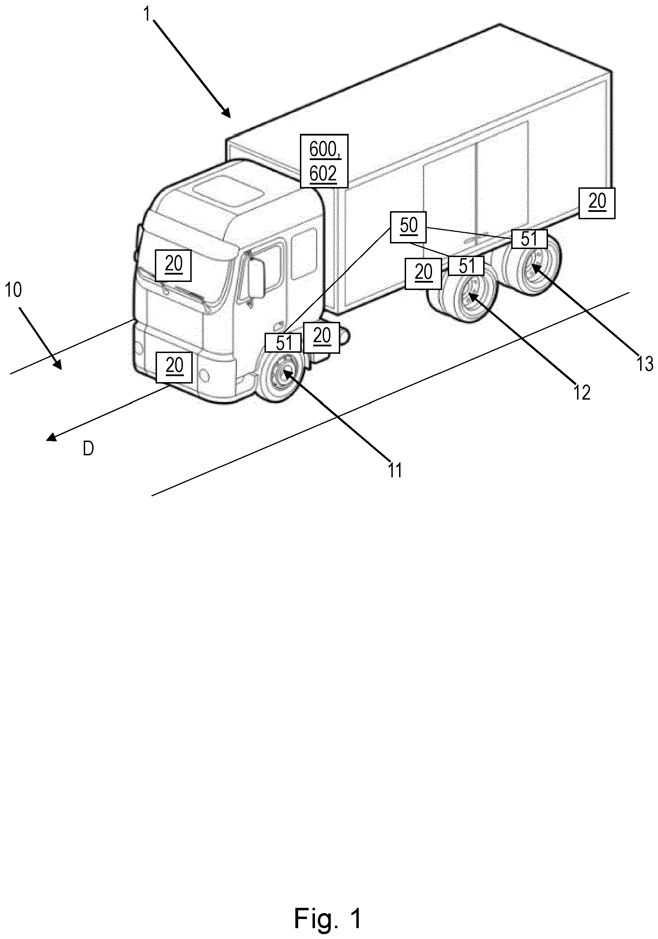

**FIG. 1** illustrates a **vehicle 1** according to an example. The vehicle 1 may be any suitable vehicle, e.g., a bus, a truck, a car, or any suitable heavy duty vehicle. The vehicle 1 is arranged to travel on a **road 10** in a driving **direction D.** The vehicle comprises a number of axles, e.g., a **first axle 11,** a **second axle 12,** and a **third axle 13.**

The vehicle 1 comprises a **braking arrangement 50.** The braking arrangement 50 may comprises a **set of braking units 51.** The set of braking units 51 may comprise any suitable brakes, brake actuators and/or retarders such as any one or more out of:
- one or more regenerative brakes, e.g., for harvesting electrical energy,
- one or more service brakes, e.g., drum brakes or disc brakes,
- one or more auxiliary brakes.

The one or more auxiliary brakes may comprise any one or more out of:
- an engine of the vehicle 1 to use for engine braking,
- a powertrain of the vehicle 1 to use for powertrain braking
- one or more jake brakes,
- one or more hydraulic retarders,
- an exhaust brake, e.g., for limiting or restricting exhaust to restrict a torque applied by an engine of the vehicle 1,
- one or more retarders of any suitable type such as one or more electromagnetic retarders mounted on a driveline of the vehicle 1 and/or one or more transmission retarders.

The braking arrangement 50 is configured with a first brake strategy out of a set of brake strategies. The set of brake strategies may be preconfigured to the braking arrangement 50.

Each brake strategy out of the set of brake strategies at least defines a brake force distribution to use when braking the vehicle 1 using the respective strategy. The brake force distribution may indicate how much brake force to use in each braking unit in the set of braking units 51. In other words, each brake strategy out of the set of brake strategies may define how much to brake using regenerative brakes vs service brake vs auxiliary brakes, etc.

Each brake strategy out of the set of brake strategies may further be optimized or otherwise associated with one or more brake effects such as any one of the following:
- - to even out brake wear of the brakes of the braking arrangement,
- - to even out tire wear of the vehicle,
- - to increase stability of the vehicle,
- - to reduce a stop time of the vehicle,
- - to increase traction to a surface travelled by the vehicle,
- - to increase energy harvesting of regenerative brakes in the braking arrangement, and
- - to increase usages of auxiliary brakes for braking the vehicle.

Each brake strategy out of the set of brake strategies may define how brake force is distributed over different axles and/or wheels of the vehicle 1. For example, the brake distribution may for some strategies be set to higher brake force on service brakes of the second axle 12 and the third axle 13 then for service brakes of the first axle 11, e.g., the brake distribution may for some strategies be set to allocate all brake force to driven axles e.g. to the second axle 12 and to the third axle 13 to minimize the use of service brakes and eliminate risk of fatigue.

Each brake strategy out of the set of brake strategies may further define how a brake distribution is to change over time when braking with the specific brake strategy, e.g., to start by using brake force using the one or more regenerative brakes and to switch to the one or more service brakes over time for a brake request.

The vehicle may comprise a **set of sensors 20,** e.g., for measuring environmental parameters of the road and/or status of the braking arrangement 50. The set of sensors may comprise any one or more out of: cameras, locations sensors, e.g., Global Positioning System (GPS) sensors, Light Detection and Ranging (Lidar) sensors, speedometer, wheel speed sensors, Inertial Measurement Unit (IMU), tire wear sensors, and any suitable sensor for measuring a motion of the vehicle, the status of the braking arrangement, and/or the environment of the vehicle 1. Sensor data of the set of sensors 20 may be used to derive or estimate any suitable parameters of examples herein.

Examples herein may be performed by a **computer system 600** and/or a **processing circuitry 602** therein. The computer system 600 and/or a processing circuitry 602 therein may be comprised in the vehicle 1 and/or remote to the vehicle 1 such as in a server and/or as part of a cloud service.

As an example, the computer system 600 and/or the processing circuitry 602 therein may be, or may be part of an Electronic Control Unit (ECU) of the vehicle 1, e.g., a brake ECU or a primary ECU of the vehicle 1.

The computer system 600 and/or the processing circuitry 602 therein may be communicatively coupled with and/or may be able to control or use any suitable entity of the vehicle 1. For example, the computer system 600 and/or the processing circuitry 602 may be able to use the set of sensors 20 for obtaining sensor data or measurements. The computer system 600 and/or the processing circuitry 602 may be able to control the braking arrangement 50, e.g., to use different brake strategies as in examples herein.

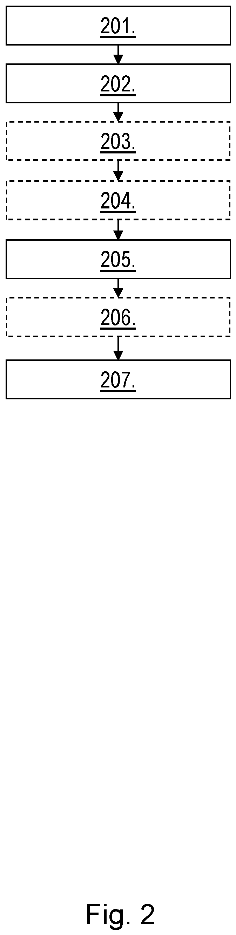

**FIG. 2** illustrates a flowchart of a computer-implemented method for handling brake strategies for the braking arrangement 50 of the vehicle 1 travelling on the road 10. The braking arrangement 50 is configured with a first brake strategy out of the set of brake strategies. Each brake strategy out of the set of brake strategies at least defines a brake force distribution to use when braking the vehicle 1 using the respective strategy. The brake force distribution may be a brake force to be actuated by any one or more out of, one or more regenerative brakes of the braking arrangement 50, one or more service brakes of the braking arrangement 50, and one or more auxiliary brakes of the braking arrangement 50.

In some examples herein, the set of brake strategies comprises strategies associated with different respective brake effects when used to brake the vehicle 1. In some examples herein the brake effects comprise any one of the following: to even out brake wear of the brakes of the braking arrangement 50, to even out tire wear of the vehicle 1, to increase stability of the vehicle 1, to reduce a stop time of the vehicle 1, to increase traction to a surface travelled by the vehicle 1, to increase energy harvesting of regenerative brakes in the braking arrangement 50, and to increase usages of auxiliary brakes for braking the vehicle 1.

The method may be performed by the computer system 600 and/or the processing circuitry 602 therein. The method comprises the following actions which may be used in any suitable combination. Optional actions may be indicated in FIG. 2 with dashed boxes.

### Action 201

The method comprises obtaining one or more brake strategy parameters. The one or more brake strategy parameters are indicative of a status of the braking arrangement 50 and/or one or more environmental parameters of the road 10.

The status of the braking arrangement 50 may relate to any parameter which may affect how the vehicle 1 is braking or will be braking. The status of the braking arrangement 50 may include parameters which directly or indirectly affect the braking of the vehicle 1 such as any one or more out of:
- status of any traction functionality of the vehicle, e.g., activated or not,
- operational and/or wear status of any component of the brake arrangement 50, e.g., of brake actuators therein,
- a status of a current gear or an indication of a gear shift, i.e., as a gear shift may trigger a need for a new brake strategy due to potential loss of auxiliary braking using the one or more auxiliary brakes,
- a status of a battery of the vehicle 1, e.g., SoC of the battery or energy levels of the battery, e.g., since the one or more regenerative brakes can only be used if the SoC or energy levels are sufficiently low.

In some examples, the status braking arrangement 50 is indicative of whether the vehicle 1 has activated a stability function, such as ABS or ESC function of the braking arrangement 50. An activated stability function indicates low friction which may further imply a need for a brake strategy with increased traction capabilities.

The status of the braking arrangement 50 may further indicate if braking is currently applied or not.

In some examples, the one or more environmental parameters of the road 10 comprises any one or more out of:
- sensor data and/or measurements of the road 10 in a driving direction D of the vehicle 1,
- one or more environmental factors of the road 10, e.g., any one or more out of snow, ice, slippery surface, and/or mud, which may indicate a need of a brake strategy with improved traction,
- an indication of one or more traffic events in a driving direction D of the vehicle 1, e.g., congestions, accidents, and/or obstacles, which may indicate a need to reduce a stop time of the vehicle, and
- a friction coefficient of the road 10 in the driving direction D of the vehicle 1.

In some examples, the one or more environmental parameters of the road 10 may be obtained at least partly by predefined map information of the road 10.

In some examples, the one or more environmental parameters of the road 10, e.g., information about road conditions in the driving direction D of the vehicle 1, may be obtained by:
- the set of sensors 20, e.g., by using a camera,
- a cloud service, e.g., using a wireless transceiver of the vehicle 1,
- using the predefined map information of the road 10,
- using vehicle to anything (V2X) communication or vehicle to vehicle (V2V) communication, e.g., with infrastructure and/or one or more road users, receiving an indication of the one or more environmental parameters of the road 10, and/or
- or a combination thereof, e.g., by fusing environmental data of different sources.

### Action 202

The method comprises obtaining vehicle motion information indicative of a motion of the vehicle 1. The motion of the vehicle 1 may comprise any one or more out of:
- a longitudinal and/or lateral speed of the vehicle 1,
- an acceleration of the vehicle 1,
- one or more wheel speeds of the vehicle 1, and
- a longitudinal and/or lateral wheel slip of one or more wheels of the vehicle 1.

Obtaining the vehicle motion information may comprise determining or estimating the vehicle motion information based on sensor data as obtained from the set of sensors 20 in any suitable manner.

### Action 203

According to some examples herein, the method comprises obtaining an indication of a brake effect to be prioritized when braking the vehicle 1, e.g., if applicable with respect to the vehicle motion of the vehicle 1 and the one or more brake strategy parameters. In some examples, the indication may be an input from a user interface of the vehicle or the computer system 600, e.g., as a preference if possible. The preference may for example relate to a preference in increasing a usage of auxiliary brakes, but which may be overridden if friction is deemed lower than a threshold. The preference may further relate to prioritized reduced tire wear and/or to prioritize a usage of auxiliary brakes to prevent service brake fatigue.

The indication may indicate a predefined order of brake effects to consider when selecting a brake strategy, e.g., first prioritize traction if needed, then prioritize even brake wear if needed, then prioritize energy harvesting if needed, then prioritize usage of auxiliary brakes. The predefined order may be ignored if deemed suitable, e.g., if friction is lower than a threshold and/or a vehicle speed or acceleration is above a threshold.

Obtaining the indication of the brake effect to be prioritized may comprise determining the indication of the brake effect to be prioritized, e.g., a brake effect determined to be most suitable for the current vehicle motion and/or the brake strategy parameters.

The determination may be performed using predefined heuristics. For example, the brake effect to be prioritized may be obtained by mapping the vehicle motion information and/or the brake strategy parameters to the brake effect to be prioritized, according to a predefined mapping.

### Action 204

According to some examples herein, the method comprises detecting a triggering event. In these examples, the triggering event indicates a change in the one or more brake strategy parameters. Detecting the triggering event may comprise detecting that at least one of the one or more brake strategy parameters have increased or decreased by more than a threshold. Detecting the triggering event may be performed periodically or whenever the one or more brake strategy parameters changes.

A change in the one or more brake strategy parameters may indicate that a new brake strategy may be needed, e.g., as these are used for selecting brake strategies. As an example, when shifting a gear, the one or more auxiliary brakes may no longer be possible to use. When friction increases, traction-oriented brake strategies may need to be used. When energy levels of a battery in the vehicle falls below a threshold, then energy harvesting may be needed.

### Action 205

The method comprises, based on the vehicle motion information and the one or more brake strategy parameters, selecting a second brake strategy out of the set of brake strategies for the braking arrangement 50 to use.

In some examples, selecting the second brake strategy out of the set of brake strategies for the braking arrangement 50 to use may be performed based on a predefined model and using the vehicle motion information and the one or more brake strategy parameters as input to the predefined model. In other words, the vehicle motion information and/or the one or more brake strategy parameters may be mapped to the second brake strategy.

In some examples, selecting the second brake strategy may comprise evaluating the set of brake strategies based on the vehicle motion information and the one or more brake strategy parameters, such as by predefined heuristics, and selecting the second brake strategy out of the set of brake strategies based on said evaluation. In some of these examples selecting the second brake strategy out of the set of brake strategies for the braking arrangement 50 to use may account for a prioritized brake strategy and/or a priority order of brake strategies which may be predefined or entered by a user through a user interface.

In some examples, selecting the second brake strategy is based on the indicated brake effect to be prioritized when braking the vehicle 1, e.g., as obtained in action 203. The prioritized brake effect may only be considered if the second brake strategy can be determined to fulfil a condition such as a safety condition. Determining whether the second brake strategy fulfils the condition may be based on predefined heuristics per brake strategy out of the set of brake strategies. For example, each brake strategy may only be selected as the second brake strategy if the vehicle motion and the one or more brake parameters are each within respective ranges of the respective strategy.

In some examples, selecting the second brake strategy is performed in response to detecting the triggering event.

Below follows some non-limiting concrete examples of strategy selection for the second brake strategy.

In some examples, when the one or more brake strategy parameters of the vehicle 1 is indicative of a low friction of the road 10, then selecting the second brake strategy may comprise selecting a brake strategy for improving traction of the vehicle, e.g., where a brake force distribution of the brake strategy distributes all brake force to the one or more service brakes of the braking arrangement 50.

In some examples, when vehicle motion information is indicative of a vehicle speed below a threshold, e.g., at a creep speed, then selecting the second brake strategy may comprise selecting a brake strategy for improving energy harvesting or use of auxiliary brakes, e.g., where a brake force distribution of the brake strategy distributes all brake force to the one or more regenerative brakes of the braking arrangement 50, and/or to the one or more auxiliary brakes of the braking arrangement 50.

In some examples, the vehicle motion information may limit the selection of the second brake strategy. For example, if the vehicle motion information is indicative of a fast speed, i.e., a vehicle speed above a threshold, brake strategies using the one or more auxiliary brakes may not be possible to use. As another example, when the vehicle motion information is indicative of a slow speed, i.e., a vehicle speed below a threshold, e.g., a creep speed, some parameters of the one or more brake strategy parameters may be less significant due to the low speed.

### Action 206

In some examples, the method comprises, based on the vehicle motion information and the one or more brake strategy parameters, determining a transition configuration indicative of a when and/or how to transition from using the first brake strategy to using the second brake strategy. For example, the transition configuration may determine that the transition shall take place immediately, within a set time period, e.g., within a 0.5- 1 second, at a certain location of the vehicle 1, and/or when the vehicle reaches a set speed and/or based on an acceleration threshold.

The transition configuration may indicate if the first brake strategy shall smoothly transition to the second brake strategy, or if an immediate transition is most suitable. For example, if the vehicle 1 is currently not braking, the transition may be triggered immediately or within a duration, e.g., less than 0.2-0.5 second. However, if the vehicle 1 is currently braking, then to maintain vehicle control, the transition may need to be smooth such that a driver of the vehicle 1 can maintain control of the vehicle 1. In these situations, the transition may be allowed to take a longer period of time, e.g., more than 1 second. Even if currently braking the transition may sometimes need to be quick, e.g., to transition in less than 1 second, e.g., if transitioning to a strategy for improving traction due to environmental parameters and/or the status of the braking arrangement as part of the one or more brake strategy parameters indicating a low friction of the road 10.

In some examples, the transition configuration comprises a fade factor indicative of how a brake distribution of the first brake strategy is to, during a transitioning time period, adapt into a brake distribution of the second brake strategy. For example, the fade factor may be a rate for how fast the brake force distribution shall change to the brake force distribution of the second brake strategy. When transitioning from the first brake strategy to the second brake strategy, the fade factor may be used to define a weight applied to the brake force distribution of the first brake strategy or the second brake strategy. The weight may subsequently be adapted to change over the transitioning time period, e.g., from 0 to 1 for the brake distribution of the first brake strategy, and/or from 1 to 0 for the brake distribution of the second brake strategy, e.g., such as that a brake distribution starts with a brake force distribution of first brake strategy, and then blend with the brake force distribution of the second brake strategy, until finally only the brake force distribution of the second brake strategy remains.

In some examples determining the transition configuration comprises selecting the fade factor out of a set of fade factors. For example, there may be three different fade factors, quick, normal, or slow, which may be selected based accounting for a need to transition quickly vs a need for more delicate vehicle control. The selection may be based on predefined heuristics of the vehicle motion information and the one or more brake strategy parameters.

In some examples, the transition configuration may, for each braking unit in the set of braking units 51 indicate how the brake force of the respective braking unit is to change during the transitioning time period. The change may be linear over transitioning time period e.g., such that a brake force for one brake unit and/or axle is shifted linearly to a brake force of another brake unit and/or axle. The change may further be defined any other suitable function over the transitioning time period.

In some examples, the transition configuration is predefined. For example, the transition configuration may be predefined to always be the same. In some examples, each braking strategy in the set of braking strategies may have a preconfigured transition configuration with respect to transitioning to said braking strategy. In some examples, any one or more pairs of braking strategies in the set of braking strategies may have a preconfigured transition configuration with respect to transitioning between said braking strategies.

### Action 207

The method comprises, triggering the braking arrangement 50 of the vehicle 1 to transition from using the first brake strategy to using the second brake strategy.

In some examples, triggering the transition from using the first brake strategy to using the second brake strategy is based on the transition configuration. This may allow for a smooth or rapid transition, depending on the determined transition configuration and depending on what is suitable for the current vehicle motion and the one or more brake strategy parameters.

In some examples, triggering the braking arrangement 50 of the vehicle 1 to transition from using the first brake strategy to using the second brake strategy comprises triggering a plurality of changes in the brake distribution of the braking arrangement 50 over a second time period. In this way, the first brake strategy and the second brake strategy can be blended by the plurality of changes until exclusively using the second brake strategy. This allows for a smooth transition with full vehicle control. The second time period and/or to trigger the plurality of changes may be indicated by the triggering configuration.

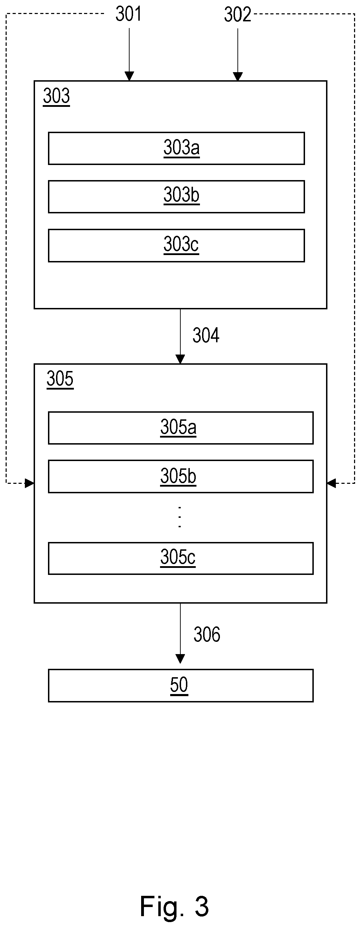

**FIG. 3** illustrates an example scenario of selecting a brake strategy.

As a **first input 301,** the one or more brake strategy parameters, e.g., as obtained in action 201, may be input into a **brake strategy selection unit 303,** e.g., as part of the computer system 600.

As a **second input 302,** the motion of the vehicle 1, e.g., as obtained in action 202, may be input into the brake strategy selection unit 303, e.g., as part of the computer system 600.

The brake strategy selection unit 303 may for example select between different brake strategies 303a, 303b, 303c, e.g., as in action 205. For example, based on the first input 301 and the second input 302, it may be determined, e.g., by the brake strategy selection unit 303, that there is a need to have a brake strategy for brake effects considering to optimize traction and to reduce uneven brake wear. Accordingly, the second brake strategy may be selected out of the set of brake strategies to best consider to optimize traction and to reduce uneven brake wear.

An **indication 304** of the second brake strategy may be transmitted to a **transition configuration determining unit 305,** e.g., as part of the computer system 600.

Based on the indication 304, e.g., as in action 206, transition configuration to use for transitioning to the second brake strategy may be determined by the transition configuration determining unit 305. For example the transition configuration determining unit 305 may select a **fade factor 305a, 305b, 305c,** to use when transitioning the first brake strategy into the second brake strategy. The selected fade factor may indicate rate of how quickly to adjust a brake force distribution of the first brake strategy into a brake force distribution of the second brake strategy. The fade factor may be applied to, or as part of a coefficient in a brake force distribution of the first brake strategy or the second brake strategy, during a transition between the first brake strategy and the second brake strategy.

The transition configuration may be determined and/or the fade factor may be selected, further based on the first input 301 and/or the second input 302. Additionally or alternatively the transition configuration may be determined and/or the fade factor may be selected, further based on user input indicative and/or a predefined configuration a preferred transition configuration and/or preferred fade factor.

The transition to the second brake strategy from the first brake strategy according to the transition configuration and/or the selected fade factor, e.g., as in action 208, may be performed by transmitting **one or more control signals 306** to the braking arrangement 50. The one or more control signals 306 may indicate to the braking arrangement 50 how a brake distribution of the first brake strategy shall transition to the brake distribution of the selected second brake strategy, e.g., over a transitioning time period.

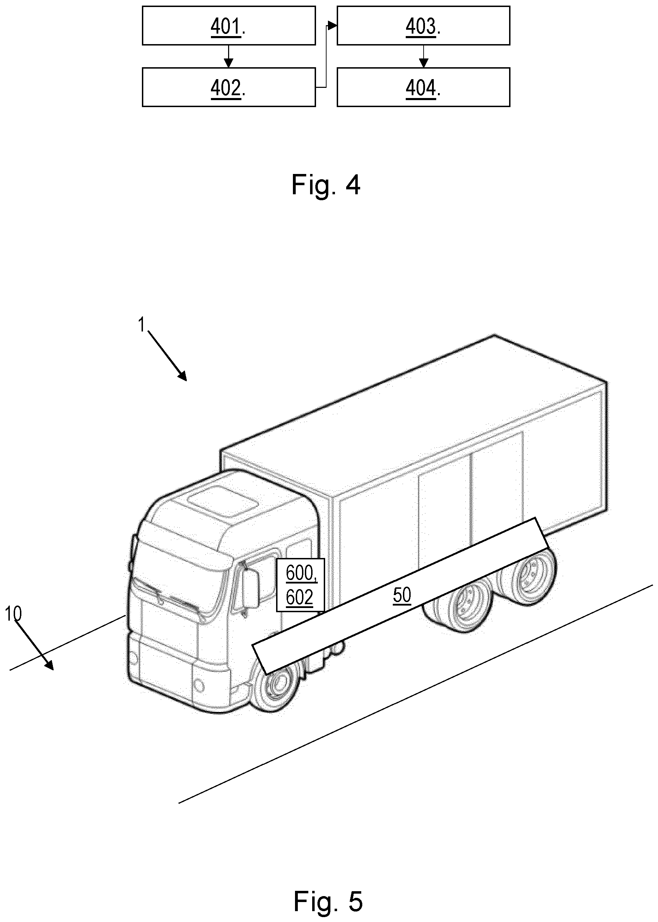

**FIG. 4** illustrates a flowchart of a computer-implemented method for handling brake strategies for the braking arrangement 50 of the vehicle 1 travelling on the road 10 according to an example. The braking arrangement 50 is configured with a first brake strategy out of a set of brake strategies. Each brake strategy out of the set of brake strategies at least defines a brake force distribution to use when braking the vehicle 1 using the respective strategy. The method may be combined with any one or more out of the examples above. The method comprises the following actions 401-404.

### Action 401

The method comprises, by the processing circuitry 602 of the computer system 600, obtaining one or more brake strategy parameters. The one or more brake strategy parameters are indicative of a status of the braking arrangement 50 and/or one or more environmental parameters of the road 10.

### Action 402

The method comprises, by the processing circuitry 602, obtaining vehicle motion information indicative of a motion of the vehicle 1.

### Action 403

The method comprises, by the processing circuitry 602, based on the vehicle motion information and the one or more brake strategy parameters, selecting a second brake strategy out of the set of brake strategies for the braking arrangement 50 to use.

### Action 404

The method comprises, by the processing circuitry 602, triggering the braking arrangement 50 of the vehicle 1 to transition from using the first brake strategy to using the second brake strategy.

**FIG. 5** illustrates another view of **FIG. 1****,** according to an example.

The computer system 600 comprises the processing circuitry 602 configured to handle brake strategies for the braking arrangement 50 of the vehicle 1 travelling on the road 10. The braking arrangement 50 is configured with a first brake strategy out of a set of brake strategies. Each brake strategy out of the set of brake strategies at least defines a brake force distribution to use when braking the vehicle 1 using the respective strategy.

The processing circuitry 602 is configured to obtain one or more brake strategy parameters. The one or more brake strategy parameters is indicative of a status of the braking arrangement 50 and/or one or more environmental parameters of the road 10.

The processing circuitry 602 is configured to obtain vehicle motion information indicative of a motion of the vehicle 1.

The processing circuitry 602 is configured to, based on the vehicle motion information and the one or more brake strategy parameters, select a second brake strategy out of the set of brake strategies for the braking arrangement 50 to use.

The processing circuitry 602 is configured to trigger the braking arrangement 50 of the vehicle 1 to transition from the first brake strategy to the second brake strategy.

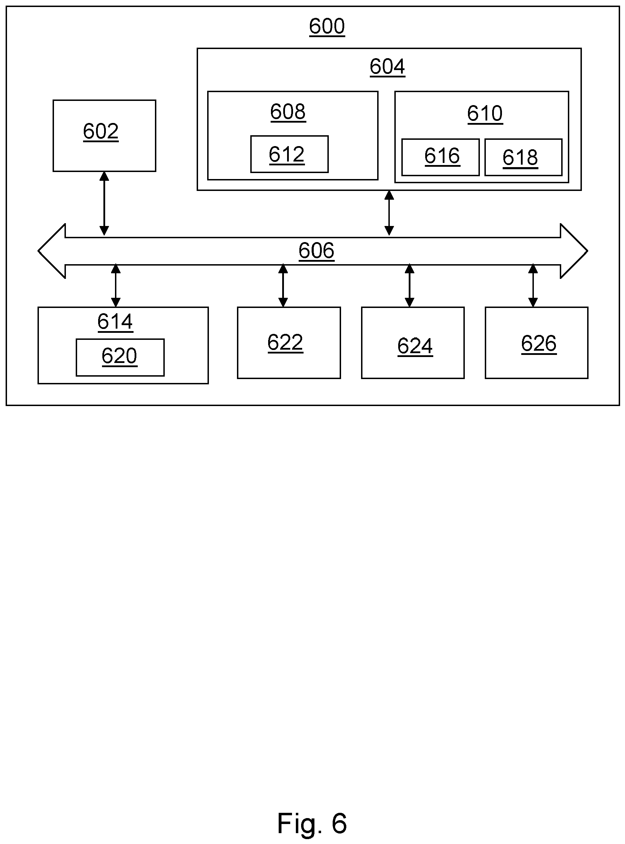

**FIG. 6** is a schematic diagram of a computer system **600** for implementing examples disclosed herein. The computer system **600** is adapted to execute instructions from a computer-readable medium to perform these and/or any of the functions or processing described herein. The computer system **600** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **600** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **600** may comprise at least one computing device or electronic device capable of including firmware, hardware, and/or executing software instructions to implement the functionality described herein. The computer system **600** may include processing circuitry **602** (e.g., processing circuitry including one or more processor devices or control units), a memory **604,** and a system bus **606.** The computer system **600** may include at least one computing device having the processing circuitry **602.** The system bus **606** provides an interface for system components including, but not limited to, the memory **604** and the processing circuitry **602.** The processing circuitry **602** may include any number of hardware components for conducting data or signal processing or for executing computer code stored in memory **604.** The processing circuitry **602** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **602** may further include computer executable code that controls operation of the programmable device.

The system bus **606** may be any of several types of bus structures that may further interconnect to a memory bus (with or without a memory controller), a peripheral bus, and/or a local bus using any of a variety of bus architectures. The memory **604** may be one or more devices for storing data and/or computer code for completing or facilitating methods described herein. The memory **604** may include database components, object code components, script components, or other types of information structure for supporting the various activities herein. Any distributed or local memory device may be utilized with the systems and methods of this description. The memory **604** may be communicably connected to the processing circuitry **602** (e.g., via a circuit or any other wired, wireless, or network connection) and may include computer code for executing one or more processes described herein. The memory **604** may include non-volatile memory **608** (e.g., read-only memory (ROM), erasable programmable read-only memory (EPROM), electrically erasable programmable read-only memory (EEPROM), etc.), and volatile memory **610** (e.g., randomaccess memory (RAM)), or any other medium which can be used to carry or store desired program code in the form of machine-executable instructions or data structures and which can be accessed by a computer or other machine with processing circuitry **602.** A basic input/output system (BIOS) **612** may be stored in the non-volatile memory **608** and can include the basic routines that help to transfer information between elements within the computer system **600.**

The computer system **600** may further include or be coupled to a non-transitory computer-readable storage medium such as the storage device **614,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **614** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **614** and/or in the volatile memory **610,** which may include an operating system **616** and/or one or more program modules **618.** All or a portion of the examples disclosed herein may be implemented as a computer program **620** stored on a transitory or non-transitory computer-usable or computer-readable storage medium (e.g., single medium or multiple media), such as the storage device **614,** which includes complex programming instructions (e.g., complex computer-readable program code) to cause the processing circuitry **602** to carry out actions described herein. Thus, the computer-readable program code of the computer program **620** can comprise software instructions for implementing the functionality of the examples described herein when executed by the processing circuitry **602.** In some examples, the storage device **614** may be a computer program product (e.g., readable storage medium) storing the computer program **620** thereon, where at least a portion of a computer program **620** may be loadable (e.g., into a processor) for implementing the functionality of the examples described herein when executed by the processing circuitry **602.** The processing circuitry **602** may serve as a controller or control system for the computer system **600** that is to implement the functionality described herein.

The computer system **600** may include an input device interface **622** configured to receive input and selections to be communicated to the computer system **600** when executing instructions, such as from a keyboard, mouse, touch-sensitive surface, etc. Such input devices may be connected to the processing circuitry **602** through the input device interface **622** coupled to the system bus **606** but can be connected through other interfaces, such as a parallel port, an Institute of Electrical and Electronic Engineers (IEEE) 1394 serial port, a Universal Serial Bus (USB) port, an IR interface, and the like. The computer system **600** may include an output device interface **624** configured to forward output, such as to a display, a video display unit (e.g., a liquid crystal display (LCD) or a cathode ray tube (CRT)). The computer system **600** may include a communications interface **626** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Below follows a number of Examples, which Examples may be combined with any one or more out of the above examples in any suitable manner.
Example 1. A computer system 600 comprising processing circuitry 602 configured to handle brake strategies for a braking arrangement 50 of a vehicle 1 travelling on a road 10, the braking arrangement 50 being configured with a first brake strategy out of a set of brake strategies, wherein each brake strategy out of the set of brake strategies at least defines a brake force distribution to use when braking the vehicle 1 using the respective strategy, the processing circuitry 602 being configured to:
   - obtain one or more brake strategy parameters, the one or more brake strategy parameters being indicative of a status of the braking arrangement 50 and/or one or more environmental parameters of the road 10,
   - obtain vehicle motion information indicative of a motion of the vehicle 1,
   - based on the vehicle motion information and the one or more brake strategy parameters, select a second brake strategy out of the set of brake strategies for the braking arrangement 50 to use, and
   - trigger the braking arrangement 50 of the vehicle 1 to transition from the first brake strategy to the second brake strategy.
Example 2. The computer system 600 of Example 1, wherein the processing circuitry 602 is further configured to:
   - based on the vehicle motion information and the one or more brake strategy parameters, determine a transition configuration indicative of a when and/or how to transition from using the first brake strategy to using the second brake strategy, and
   - trigger the transition from using the first brake strategy to using the second brake strategy based on the transition configuration.
Example 3. The computer system 600 of any of Examples 1-2, wherein the transition configuration comprises a fade factor indicative of how a brake distribution of the first brake strategy is to, during a transitioning time period, adapt into a brake distribution of the second brake strategy.
Example 4. The computer system 600 of Example 3, wherein the processing circuitry 602 is configured to determine the transition configuration by being configured to select the fade factor out of a set of fade factors.
Example 5. The computer system 600 of Example 3 or 4, wherein the processing circuitry 602 is further configured to trigger the braking arrangement 50 of the vehicle 1 to transition from using the first brake strategy to using the second brake strategy by triggering a plurality of changes in the brake distribution of the braking arrangement 50 over a second time period.
Example 6. The computer system 600 of any of Examples 1-5, wherein the brake force distribution defines a brake force to be actuated by any one or more out of:
   - one or more regenerative brakes of the braking arrangement 50,
   - one or more service brakes of the braking arrangement 50, and
   - one or more auxiliary brakes of the braking arrangement 50.
Example 7. The computer system 600 of any of Examples 1-6, wherein the set of brake strategies comprises strategies associated with different respective brake effects when used to brake the vehicle 1.
Example 8. The computer system 600 of any of Examples 1-7, wherein the processing circuitry 602 is further configured to:
   - obtain an indication of a brake effect to be prioritized when braking the vehicle 1, and
   - select the second brake strategy based on the indicated brake effect.
Example 9. The computer system 600 of Example 8, wherein the brake effects comprise any one of the following:
   - to even out brake wear of the brakes of the braking arrangement 50,
   - to even out tire wear of the vehicle 1,
   - to increase stability of the vehicle 1,
   - to reduce a stop time of the vehicle 1,
   - to increase traction to a surface travelled by the vehicle 1,
   - to increase energy harvesting of regenerative brakes in the braking arrangement 50, and
   - to increase usages of auxiliary brakes for braking the vehicle 1.
Example 10. The computer system 600 of any of Examples 1-9, wherein status of the braking arrangement 50 is indicative of whether the vehicle 1 has activated a stability function, such as an Anti-lock Braking System, ABS, or an Electronic Stability Control, ESC, function of the braking arrangement 50.
Example 11. The computer system 600 of any of Examples 1-10, wherein the one or more environmental parameters of the road 10 comprises any one or more out of:
   - sensor data and/or measurements of the road 10 in a driving direction D of the vehicle 1,
   - one or more environmental factors of the road 10,
   - an indication of one or more traffic events in a driving direction D of the vehicle 1, and
   - a friction coefficient of the road 10 in the driving direction D of the vehicle 1.
Example 12. The computer system 600 of any of Examples 1-11, wherein the motion of the vehicle 1 comprises any one or more out of:
   - a longitudinal and/or lateral speed of the vehicle 1,
   - an acceleration of the vehicle 1,
   - one or more wheel speeds of the vehicle 1, and
   - a longitudinal and/or lateral wheel slip of one or more wheels of the vehicle 1.
Example 13. The computer system 600 of any of Examples 1-12, wherein the processing circuitry 602 is configured to select the second brake strategy in response to detecting a triggering event, which triggering event indicates a change in the one or more brake strategy parameters.
Example 14. A vehicle comprising a braking arrangement 50 and comprising the computer system 600 of any of Examples 1-13.
Example 15. A computer-implemented method for handling brake strategies for a braking arrangement 50 of a vehicle 1 travelling on a road 10, the braking arrangement 50 being configured with a first brake strategy out of a set of brake strategies, wherein each brake strategy out of the set of brake strategies at least defines a brake force distribution to use when braking the vehicle 1 using the respective strategy, the method comprising:
   - by processing circuitry 602 of a computer system 600, obtaining 201, 401 one or more brake strategy parameters, the one or more brake strategy parameters being indicative of a status of the braking arrangement 50 and/or one or more environmental parameters of the road 10,
   - by the processing circuitry 602, obtaining 202, 402 vehicle motion information indicative of a motion of the vehicle 1,
   - by the processing circuitry 602, based on the vehicle motion information and the one or more brake strategy parameters, selecting 205, 403 a second brake strategy out of the set of brake strategies for the braking arrangement 50 to use, and
   - by the processing circuitry 602, triggering 207, 404 the braking arrangement 50 of the vehicle 1 to transition from using the first brake strategy to using the second brake strategy.
Example 16. The method Example 15, further comprising:
   - based on the vehicle motion information and the one or more brake strategy parameters, determining 206 a transition configuration indicative of a when and/or how to transition from using the first brake strategy to using the second brake strategy, and
   - triggering 207 the transition from using the first brake strategy to using the second brake strategy based on the transition configuration.
Example 17. The method of any of Examples 15-16, further comprising:
   - obtaining 203 an indication of a brake effect to be prioritized when braking the vehicle 1, and
   - selecting 205 the second brake strategy based on the indicated brake effect.
Example 18. The method of any of Examples 15-17, further comprising:
   - detecting 204 a triggering event, which triggering event indicates a change in the one or more brake strategy parameters, and
   - selecting 205 the second brake strategy in response to detecting the triggering event.
Example 19. A computer program product comprising program code for performing, when executed by the processing circuitry 602, the method of any of Examples 16-18.
Example 20. A non-transitory computer-readable storage medium comprising instructions, which when executed by the processing circuitry 602, cause the processing circuitry 602 to perform the method of any of Examples 16-18.

The terminology used herein is for the purpose of describing particular aspects only and is not intended to be limiting of the disclosure. As used herein, the singular forms "a", "an", and "the" are intended to include the plural forms as well, unless the context clearly indicates otherwise. As used herein, the term "and/or" includes any and all combinations of one or more of the associated listed items. It will be further understood that the terms "comprises", "comprising", "includes", and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (600) comprising processing circuitry (602) configured to handle brake strategies for a braking arrangement (50) of a vehicle (1) travelling on a road (10), the braking arrangement (50) being configured with a first brake strategy out of a set of brake strategies, wherein each brake strategy out of the set of brake strategies at least defines a brake force distribution to use when braking the vehicle (1) using the respective strategy, the processing circuitry (602) being configured to:
- obtain one or more brake strategy parameters, the one or more brake strategy parameters being indicative of a status of the braking arrangement (50) and/or one or more environmental parameters of the road (10),
- obtain vehicle motion information indicative of a motion of the vehicle (1),
- based on the vehicle motion information and the one or more brake strategy parameters, select a second brake strategy out of the set of brake strategies for the braking arrangement (50) to use, and
- trigger the braking arrangement (50) of the vehicle (1) to transition from the first brake strategy to the second brake strategy.

2. The computer system (600) of claim 1, wherein the processing circuitry (602) is further configured to:
- based on the vehicle motion information and the one or more brake strategy parameters, determine a transition configuration indicative of a when and/or how to transition from using the first brake strategy to using the second brake strategy, and
- trigger the transition from using the first brake strategy to using the second brake strategy based on the transition configuration.

3. The computer system (600) of any of claims 1-2, wherein the transition configuration comprises a fade factor indicative of how a brake distribution of the first brake strategy is to, during a transitioning time period, adapt into a brake distribution of the second brake strategy.

4. The computer system (600) of claim 3, wherein the processing circuitry (602) is configured to determine the transition configuration by being configured to select the fade factor out of a set of fade factors.

5. The computer system (600) of claim 3 or 4, wherein the processing circuitry (602) is further configured to trigger the braking arrangement (50) of the vehicle (1) to transition from using the first brake strategy to using the second brake strategy by triggering a plurality of changes in the brake distribution of the braking arrangement (50) over a second time period.

6. The computer system (600) of any of claims 1-5, wherein the brake force distribution defines a brake force to be actuated by any one or more out of:
- one or more regenerative brakes of the braking arrangement (50),
- one or more service brakes of the braking arrangement (50), and
- one or more auxiliary brakes of the braking arrangement (50).

7. The computer system (600) of any of claims 1-6, wherein the set of brake strategies comprises strategies associated with different respective brake effects when used to brake the vehicle (1) and optionally, wherein the processing circuitry (602) is further configured to:
- obtain an indication of a brake effect to be prioritized when braking the vehicle (1), and
- select the second brake strategy based on the indicated brake effect.

8. The computer system (600) of claim 7, wherein the brake effects comprise any one of the following:
- to even out brake wear of the brakes of the braking arrangement (50),
- to even out tire wear of the vehicle (1),
- to increase stability of the vehicle (1),
- to reduce a stop time of the vehicle (1),
- to increase traction to a surface travelled by the vehicle (1),
- to increase energy harvesting of regenerative brakes in the braking arrangement (50), and
- to increase usages of auxiliary brakes for braking the vehicle (1).

9. The computer system (600) of any of claims 1-8, wherein status of the braking arrangement (50) is indicative of whether the vehicle (1) has activated a stability function, such as an Anti-lock Braking System, ABS, or an Electronic Stability Control, ESC, function of the braking arrangement (50), and/or wherein the one or more environmental parameters of the road (10) comprises any one or more out of:
- sensor data and/or measurements of the road (10) in a driving direction (D) of the vehicle (1),
- one or more environmental factors of the road (10),
- an indication of one or more traffic events in a driving direction (D) of the vehicle (1), and
- a friction coefficient of the road (10) in the driving direction (D) of the vehicle (1).

10. The computer system (600) of any of claims 1-9, wherein the processing circuitry (602) is configured to select the second brake strategy in response to detecting a triggering event, which triggering event indicates a change in the one or more brake strategy parameters.

11. A vehicle comprising a braking arrangement (50) and comprising the computer system (600) of any of claims 1-10.

12. A computer-implemented method for handling brake strategies for a braking arrangement (50) of a vehicle (1) travelling on a road (10), the braking arrangement (50) being configured with a first brake strategy out of a set of brake strategies, wherein each brake strategy out of the set of brake strategies at least defines a brake force distribution to use when braking the vehicle (1) using the respective strategy, the method comprising:
- by processing circuitry (602) of a computer system (600), obtaining (201, 401) one or more brake strategy parameters, the one or more brake strategy parameters being indicative of a status of the braking arrangement (50) and/or one or more environmental parameters of the road (10),
- by the processing circuitry (602), obtaining (202, 402) vehicle motion information indicative of a motion of the vehicle (1),
- by the processing circuitry (602), based on the vehicle motion information and the one or more brake strategy parameters, selecting (205, 403) a second brake strategy out of the set of brake strategies for the braking arrangement (50) to use, and
- by the processing circuitry (602), triggering (207, 404) the braking arrangement (50) of the vehicle (1) to transition from using the first brake strategy to using the second brake strategy.

13. The method claim 12, further comprising:
- based on the vehicle motion information and the one or more brake strategy parameters, determining (206) a transition configuration indicative of a when and/or how to transition from using the first brake strategy to using the second brake strategy, and
- triggering (207) the transition from using the first brake strategy to using the second brake strategy based on the transition configuration.

14. A computer program product comprising program code for performing, when executed by the processing circuitry (602), the method of any of claims 12-13.

15. A non-transitory computer-readable storage medium comprising instructions, which when executed by the processing circuitry (602), cause the processing circuitry (602) to perform the method of any of claims 12-13.
